# EUROPEAN PATENT APPLICATION

(11) **EP 4 372 549 A1**
(43) Date of publication of application: **22.05.2024**
(21) Application number: 23762357.4
(22) Date of filing: 31.08.2023
(51) Int. Cl.: G06F 8/41, G06F 9/455, G06F 9/451, G06F 3/04817

(54) **ELECTRONIC DEVICE FOR OBTAINING INFORMATION USED TO COMPILE APPLICATION, AND METHOD THEREOF**

(30) Priority: 28.09.2022 KR 20220123834; 24.10.2022 KR 20220137495
(71) Applicant: Samsung Electronics Co., Ltd., Suwon-si, Gyeonggi-do 16677 (KR)
(72) Inventor: JEONG, Kwanhee, Suwon-si, Gyeonggi-do 16677 (KR); LONCHAKOV, Sergei, Moscow 127018 (RU); TITARENKO, Ivan, Moscow 127018 (RU); KIM, Hyoungjong, Suwon-si, Gyeonggi-do 16677 (KR); LIM, Chanbin, Suwon-si, Gyeonggi-do 16677 (KR); MAIDANSKII, Ivan, Moscow 127018 (RU); MOLOGIN, Stanislav, Moscow 127018 (RU); VISOCHAN, Andrei, Moscow 127018 (RU)
(74) Representative: HGF
(86) International application number: PCT/KR2023/013043
(87) International publication number: WO 2024/071707

(57) **Abstract**

According to an embodiment, a processor of an electronic device is configured to store, in the volatile memory, instructions included in a package file which is stored in the non-volatile memory, and is received through the communication circuitry. The processor is configured to execute, based on the instructions stored in the volatile memory, a process in a second state which is different from a first state for displaying a screen of the application in the display. The processor is configured to display, in the display in response to an input indicating execution of a process corresponding to the package file, the screen corresponding to the application by switching a state of the process from the second state to the first state.

## Description

### [Technical Field]

The present disclosure relates to an electronic device and a method for obtaining information used for compiling (or, in other words, for compilation of) an application.

### [Background Art]

A processor of the electronic device may execute one or more instructions to control a circuit in the electronic device connected to the processor. A first type of instruction directly readable by the processor may be referred to as native code. An application such as a virtual machine may be stored in the electronic device to execute a second type of instruction different from the first type by using the processor.

### [Disclosure]

### [Technical Solution]

According to an embodiment, an electronic device may comprise a non-volatile memory, a volatile memory, a display, a communication circuitry, and a processor. The processor may be configured to load (or store), in the volatile memory, instructions included in a package file of an application, which is stored in the non-volatile memory, and for example is received (or has been received) through the communication circuitry. The processor may be configured to execute, based on the instructions loaded (or stored) in the volatile memory, a process in a second state (or second mode) which is different from a first state (or first mode) for displaying a screen of the application in the display. The processor may be configured to display, in the display in response to an input for executing (or indicating execution of) a process corresponding to the package file, the screen of the application (e.g. corresponding to the input) by (or based on) switching a state (or mode) of the process from the second state (or mode) to the first state (or mode).

According to an embodiment, a method of an electronic device may comprise loading (or storing) instructions included in a package file of an application, that is received (or has been received) through a communication circuit of the electronic device and is stored in a non-volatile memory of the electronic device, in a volatile memory of the electronic device. The method may comprise executing, based on the instructions loaded (or stored) in the volatile memory, a process in a second state (or second mode) different from a first state (or first mode) for displaying a screen of the application in a display of the electronic device. The method may comprise displaying, in response to an input for executing a process corresponding to the package file, the screen of the application by switching a state (or mode) of the process from the second state (or mode) to the first state (or mode).

According to an embodiment, an electronic device may comprise a communication circuitry and a processor. The processor may be configured to receive, through a communication circuitry, a package file of an application, including instructions in a second type different from instructions in a first type readable by a processor. The processor may be configured to obtain, in a first state (or first mode) identifying profile information corresponding to the package file, instructions in the first type from the instructions in the second type included in the package file based on the profile information. The processor may be configured to execute, in a second state (or second mode) different from the first state, at least one of the instructions in the second type included in the package file, based on a process in the second state which is different from a first state in which accessing to a resource of the electronic device different from the processor is permitted. The processor may be configured to obtain, based on at least one instruction executed by the process in the second state, profile information used for obtaining instructions in the first type from the instructions in the second type included in the package file.

According to an embodiment, a method of an electronic device may comprise receiving, through a communication circuitry of the electronic device, a package of an application, file including instructions in a second type different from instructions in a first type readable by a processor of the electronic device. The method may comprise identifying profile information corresponding to the package file in a first state (or first mode) in which accessing to a resource of the electronic device different from the processor is permitted. The method may comprise obtaining instructions in the first type from the instructions in the second type included in the package file based on the profile information. The method may comprise executing (e.g. in a second state different from the first state) at least one of the instructions in the second type included in the package file, based on a process of which a state is corresponding to the second state different from the first state. The method may comprise obtaining, based on the at least one instruction executed by the process in the second state, profile information used for obtaining instructions in the first type from the instructions in the second type included in the package file.

### [Description of the Drawings]

FIG. 1 is a block diagram of an electronic device in a network environment according to various embodiments.
FIG. 2 illustrates an example of an operation in which an electronic device executes one or more instructions according to an embodiment.
FIG. 3 illustrates an example of a user interface (UI) displayed by an electronic device to install a package file, according to an embodiment.
FIG. 4 illustrates an example of an operation performed by an electronic device based on an input for installing a package file, based on a time axis, according to an embodiment.
FIG. 5 illustrates an example of an operation in which an electronic device obtains profile information based on execution of a process corresponding to a package file, according to an embodiment.
FIG. 6 illustrates an example of an operation in which an electronic device performs a compilation for at least one of instructions included in a package file based on profile information, according to an embodiment.
FIG. 7 illustrates an example of a flowchart for describing an operation of an electronic device, according to an embodiment.
FIG. 8 illustrates an example of a flowchart for describing an operation of an electronic device, according to an embodiment.
FIG. 9 illustrates an example of a flowchart for describing an operation of an electronic device, according to an embodiment.

### [Mode for Invention]

Hereinafter, various embodiments of the present document will be described with reference to the accompanying drawings.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

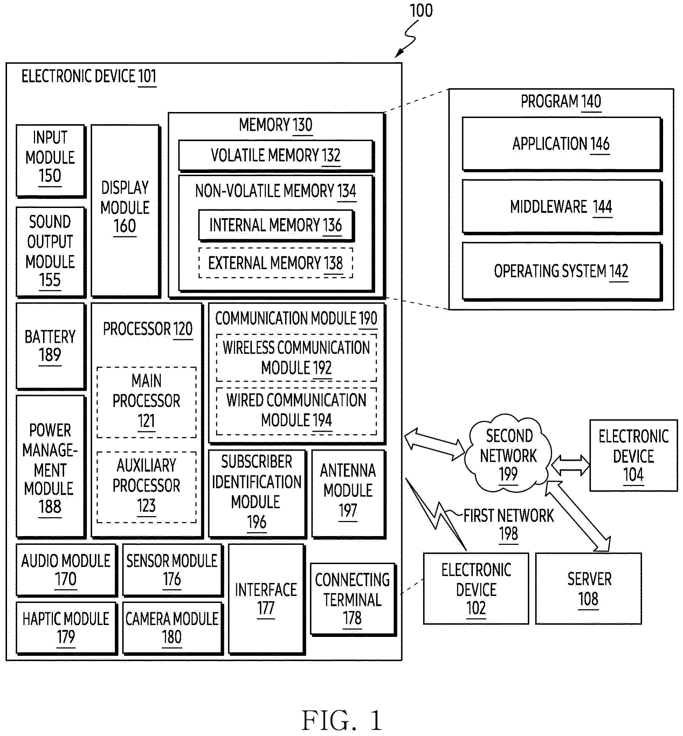

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

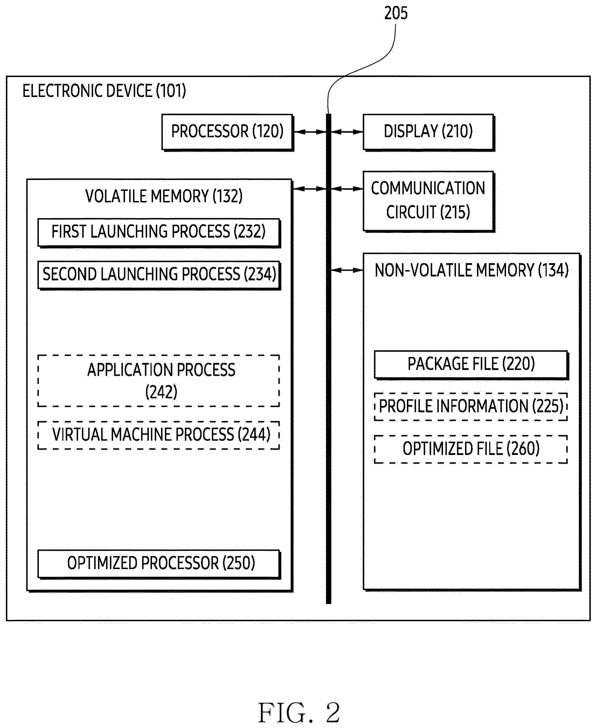

FIG. 2 illustrates an example of an operation in which an electronic device 101 executes one or more instructions according to an embodiment. The electronic device 101 may include at least one of a processor 120, a volatile memory 132, a non-volatile memory 134, a display 210, or a communication circuit 215. The processor 120, the volatile memory 132, the non-volatile memory 134, the display 210, and the communication circuit 215 may be electrically and/or operably coupled with each other by electronical components such as a communication bus 205. Hereinafter, the operational coupling of hardware components may mean that a direct or indirect connection between hardware components is established by wire or wirelessly, so that a second hardware component is controlled by a first hardware component among the hardware components. Although illustrated based on different blocks, embodiments are not limited thereto, and some of the hardware of FIG. 2 (e.g., at least a part of the processor 120, the volatile memory 132, and the communication circuit 215) may be included in a single integrated circuit, such as a system on a chip (SoC). The types and/or numbers of hardware components included in the electronic device 101 are not limited to those illustrated in FIG. 2. For example, the electronic device 101 may include only some of the hardware components illustrated in FIG. 2.

According to an embodiment, the processor 120 of the wearable device 101 may include a hardware component for processing data based on one or more instructions. For example, hardware components for processing data may include an arithmetic and logic unit (ALU), a floating point unit (FPU), a field programmable gate array (FPGA), a central processing unit (CPU), and/or application processor (AP). The number of processors 120 may be one or more. For example, the processor 120 may have a structure of a multi-core processor such as a dual core, a quad core, or a hexa core. The processor 120 of FIG. 2 may include the processor 120 of FIG. 1.

Referring to FIG. 2, the volatile memory 132 and/or the non-volatile memory 134 of the electronic device 101 may include a hardware component for storing data and/or an instruction inputted and/or outputted to the processor 120. The volatile memory 132 may be referred to as, for example, random-access memory (RAM). The volatile memory 132 may include, for example, at least one of dynamic RAM (DRAM), static RAM (SRAM), Cache RAM, and pseudo SRAM (PSRAM). The non-volatile memory 134 may be referred to as a read-only memory (ROM). The non-volatile memory 134 may include, for example, at least one of a programmable ROM (PROM), erasable PROM (EPROM), electrically erasable PROM (EEPROM), flash memory, hard disk, compact disk, solid state drive (SSD), and embedded multimedia card (eMMC). Each of the volatile memory 132 and the non-volatile memory 134 of FIG. 2 may include the volatile memory 132 and the non-volatile memory 134 of FIG. 1.

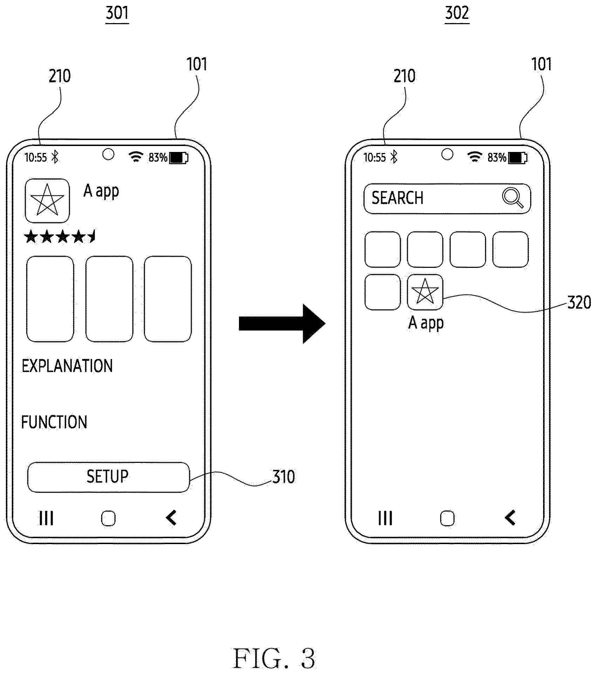

Referring to FIG. 2, the display 210 of the electronic device 101 may output visualized information (e.g., at least one of screens of FIGS. 3 to 4)to the user. For example, the display 210 may be controlled by a controller such as a processor 120 and/or a graphic processing unit (GPU) to output visualized information to the user. The display 210 may include a flat panel display (FPD) and/or an electronic paper. The FPD may include a liquid crystal display (LCD), a plasma display panel (PDP), and/or one or more light emitting diodes (LEDs). The LED may include an organic LED (OLED). The display 210 of FIG. 2 may include the display module 160 of FIG. 1.

According to an embodiment, the display 210 of the electronic device 101 may include a sensor (e.g., a touch sensor panel (TSP)) for detecting an external object (e.g., a user's finger) on the display 210. For example, the electronic device 101 may detect external objects contacting the display 210 or floating on the display 210 based on the TSP. In response to detecting the external object, the electronic device 101 may perform a function related to a specific visual object corresponding to a position of the external object on the display 210 among the visual objects displayed in the display 210.

Referring to FIG. 2, the communication circuit 215 of the electronic device 101 may include hardware to support transmission and/or reception of an electrical signal between the electronic device 101 and an external electronic device. For example, the communication circuit 215 may include at least one of a MODEM, an antenna, and an optic/electronic (O/E) converter. The communication circuit 215 may support transmission and/or reception of an electrical signal, based on various types of protocols such as Ethernet, local area network (LAN), wide area network (WAN), wireless fidelity (Wi-Fi), Bluetooth, Bluetooth low energy (BLE), ZigBee, long term evolution (LTE), and 5G new radio (NR). The communication circuit 215 of FIG. 2 may include a communication module 190 of FIG. 1, a subscriber identification module 196, and/or an antenna module 197.

In the volatile memory 132 and/or the non-volatile memory 134, one or more instructions (or commands) indicating calculations (e.g., arithmetic operations, and/or logic operations) and/or operations (e.g., data transmission, conditional execution, and/or interrupt control) to be performed by the processor on data may be stored. Instructions stored in the memory (e.g., the memory 130 of FIG. 1) of the electronic device 101 including the volatile memory 132 and/or the non-volatile memory 134 may be classified according to whether it is readable by the processor 120. Hereinafter, a type of instruction may be classified into a first type and a second type according to whether it is directly readable by the processor 120. For example, the first type of instruction may include an instruction directly readable by the processor 120. The first type of instruction may be referred to as a native code. For example, the second type of instruction may include an instruction different from the first type of instruction directly readable by the processor 120. The second type of instruction may include byte code (e.g., Java byte code).

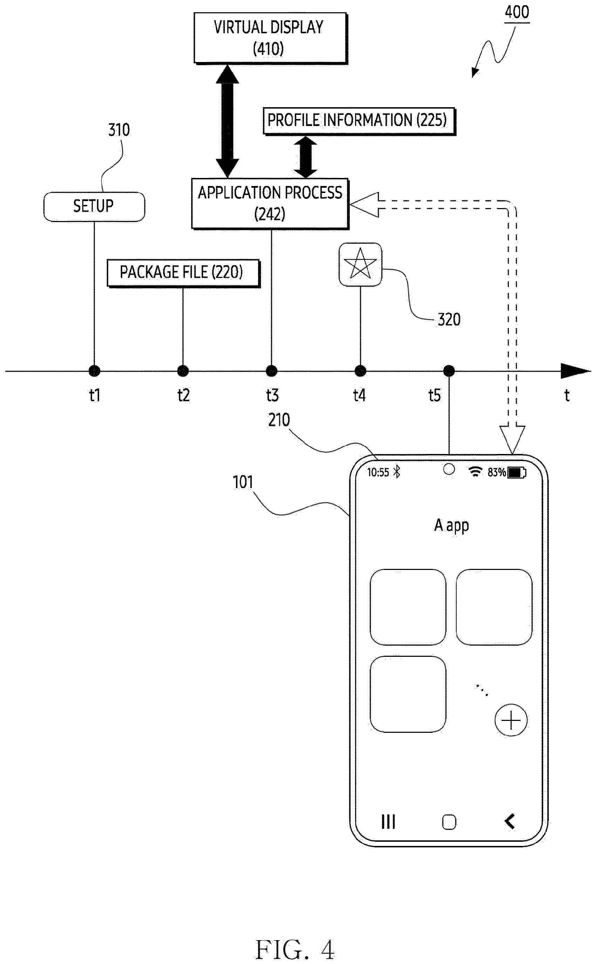

A set of one or more instructions may be stored in the volatile memory 132 and/or the non-volatile memory 134. The set of one or more instructions may be referred to as firmware, operating system, process, instance, daemon, routine, sub-routine, and/or application. The set of instructions referred to as the application may include the first type of instruction and/or the second type of instruction. Referring to FIG. 2, a package file 220 stored in the non-volatile memory 134 may include a set of instructions corresponding to a specific application and data required for the execution of the set of instructions. The data may include an icon representing the specific application, metadata indicating authority of the specific application (e.g., manifest.xml), an image and/or a video included in a screen of the specific application. The package file 220 may have an extension (e.g., pkg and/or apk) designated by operating system (e.g., the operating system 142 of FIG. 1) executed by the processor 120 of the electronic device 101. Hereinafter, the fact that an application is installed in the electronic device 101 may mean that the package file 220 including a set of instructions related to the application is stored in the non-volatile memory 134 of the electronic device 101. An operation of storing the package file 220 in the non-volatile memory 134 by the electronic device 101 will be described with reference to FIGS. 3 and 4. For example, the operation of the electronic device 101 described with reference to FIGS. 3 to 9 may be performed to install an application.

Referring to FIG. 2, the processor 120 of the electronic device 101 may execute a process (e.g., a first launching process 232 and/or a second launching process 234) for executing an instruction (e.g., instructions included in the package file 220) stored in a non-volatile memory 134. Hereinafter, a process (or instance, thread) may refer to a unit of one or more operations and/or tasks performed by the processor 120 of the electronic device 101. For example, the operating system executed by the processor 120 may determine or adjust the order of instructions executed sequentially by the processor 120 with the process as a unit. An operation of executing (or launching) a process may include at least one of forming at least one area for execution of the process in the volatile memory 132, loading one or more instructions related to the process (e.g., the first type or the second type of instructions) in the at least one area, or assigning an identifier (e.g., process ID, instance ID, and/or thread ID) to the process. Referring to FIG. 2, different processes (e.g., the first launching process 232, the second launching process 234, application process 242, virtual machine process 244, and/or optimized process 250) loaded in different areas in the volatile memory 132 are illustrated.

The first launching process 232 may be executed by the processor 120 to execute a process different from the first launching process 232. Based on the first launching process 232, the processor 120 may execute a process, in a first state (or first mode) in which controlling a hardware (e.g., the display 210 and/or the communication circuit 215) included in the electronic device 101 is allowed for the process. The first launching process 232 may be referred to as a start-activity service, a window manager, an activity starter, and/or an activity manager. Hereinafter, a service may refer to an application (e.g., a system application) provided by the operating system of the electronic device 101. The second launching process 234 may be executed by the processor 120 to execute a process different from the second launching process 234. In a second state (or second mode) (e.g., another state different from the first state) in which the control of the hardware included in the electronic device 101 is interrupted, the processor 120 may execute the process based on the second launching process 234. The second state may include a state different from the first state in which access to hardware and/or resources of the electronic device 101 is allowed. The first launching process 232 and/or the second launching process 234 may be executed by booting the electronic device 101.

For example, processor 120 may generate the application process 242 corresponding to the package file 220 by loading at least one instruction included in the package file 220 in the volatile memory 132, based on the execution of the first launching process 232 and/or the second launching process 234. Hereinafter, executing an application may include generating and executing the application process 242 corresponding to the package file 220 related to the application. In an embodiment in which the package file 220 includes a first type of instructions readable by the processor 120 and a second type of instructions different from the first type, the first type of instruction and the second type of instruction may be stored in the volatile memory 132 based on the generation of the application process 242. The processor 120 may execute a virtual machine process 244 corresponding to the application process 242 to execute the second type of instruction. Although the application process 242 and the virtual machine process 244 are illustrated in different blocks, the virtual machine process 244 may be included in the application process 242. The virtual machine process 244 may be executed by the processor 120 to perform a function corresponding to the second type of instruction referred to a byte code, such as a Java virtual machine (JVM).

The processor 120 may execute the first type of instruction related to the application process 242 independently of the virtual machine process 244. The processor 120 may execute the second type of instruction related to the application process 242 based on the virtual machine process 244. For example, the virtual machine process 244 may identify one or more the first type of instructions for executing a function indicated by the second type of instruction, from the second type of instruction. The processor 120 may execute the function indicated by the second type of the instruction by executing the one or more instructions identified by the virtual machine process 244. Based on the execution of the virtual machine process 244, an operation in which the processor 120 identifies one or more the first type of instructions from the second type of instruction may be referred to as an interpretation of the instruction. The interpretation of the instruction based on the virtual machine process 244 may delay execution of the second type of instructions related to the application process 242. The operation performed by the processor 120 of the electronic device 101 based on the execution of the application process 242 and/or the virtual machine process 244 will be described with reference to FIGS. 4 to 5.

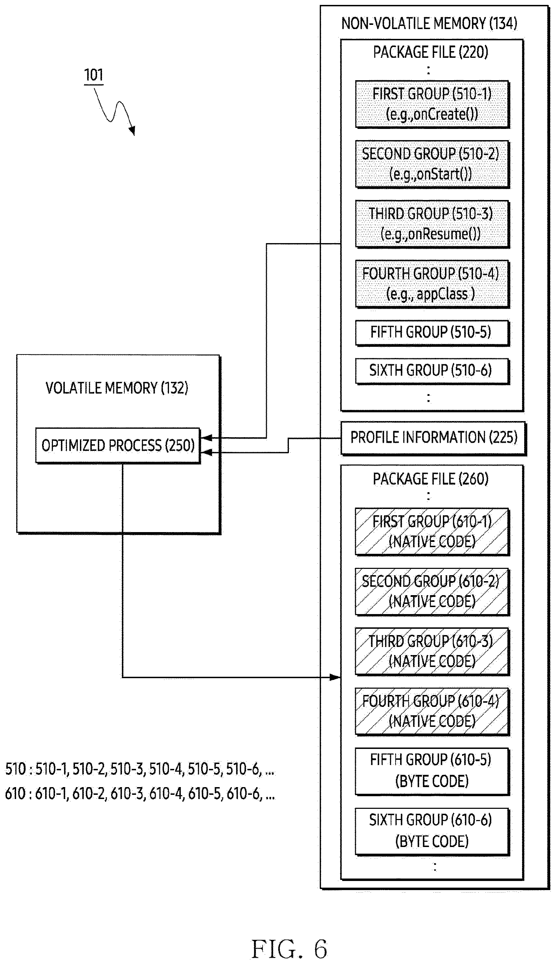

The optimized process 250 may be executed by the processor 120 to compile at least one of the second type of instructions included in the package file 220. The optimized process 250 may include a compiler for performing compilation for the second type of instruction. In a state in which the optimized process 250 is executed, the processor 120 may selectively compile at least one of the second types of instructions included in the package file 220, based on profile information 225 corresponding to the package file 220. When the second type of instructions in the package file 220 are grouped in units of classes and/or methods, the profile information 225 may store frequencies in which each of the groups of the second type of instructions is executed by processor 120. For example, in a state in which the application process 242 corresponding to the package file 220 is executed, the processor 120 may obtain the profile information 225 based on the frequencies in which the groups are executed by the application process 242. The processor 120 executing the optimized process 250 may obtain an optimized file 260, by selectively compiling at least one group with relatively high frequencies among the groups based on the profile information 225. The optimized process 250 may include a system process with a name such as 'dex2oat' and/or 'BackgroundDexOptService'. Hereinafter, the optimization of the package file 220 may include generating the optimized file 260 and/or storing the optimized file 260 based on the execution of the optimized process 250. An operation in which the electronic device 101 obtains the optimized file 260 corresponding to the package file 220 based on the profile information 225 will be described with reference to FIG. 6.

According to an embodiment, the electronic device 101 may receive the package file 220 and/or the profile information 225 related to the application through the communication circuit 215 in a state of installing the application. In a case of receiving the package file 220 among the package file 220 and the profile information 225, the electronic device 101 may execute the application process 242 corresponding to the package file 220 based on the second launching process 234. The application process 242 may be executed in a second state in which control of the hardware included in the electronic device 101 is interrupted based on the second launching process 234. For example, the processor 120 may refrain from displaying a screen related to the application process 242 in the display 210 while executing the application process 242 in the second state. The processor 120 may obtain the profile information 225 to be used for optimizing the package file 220 based on the optimized process 250, based on the application process 242. The electronic device 101 may obtain the profile information 225 in a case of receiving the package file 220 alone without the profile information 225, by using the application process 242 in the second state. The processor 120 may obtain the profile information 225 while reducing resource usage such as a time and/or occupancy state of the display. In terms of launching the application process 242 related to the application, independently of an input indicating to execute the application, the second launching process 234 may be referred to as a pre-launching service.

The processor 120 of the electronic device 101 may store the package file 220 in the non-volatile memory 134, in response to an input for installing the application. In a state in which the input is made by the user, the probability that the application installed by the input will be executed by the user may be higher than the probability that another application will be executed by the user. According to an embodiment, the electronic device 101 may prepare for another input performed by the user and indicating that the application is executed after the input, by executing the application process 242 corresponding to the application based on the input for installing the application. For example, the processor 120 may change a state of the application process 242 from the second state in which the control of the hardware included in the electronic device 101 is interrupted to the first state in which the control of the hardware included in the electronic device 101 is allowed for the application process, in response to the other input indicating to execute the application. Based on the change of the state of the application process 242, the electronic device 101 may bypass an operation for launching the application in response to the other input. For example, an operation of loading instructions included in the package file 220 into the volatile memory 132 may be bypassed. For example, a generation and/or execution of additional process different from the application process 242 may be omitted, when the other input is received. The electronic device 101 may react to the other input more quickly, based on the change of the state of the application process 242.

Hereinafter, referring to FIG. 3, according to an embodiment, an example of an operation in which the electronic device 101 stores the package file 220 in the non-volatile memory 134 will be described.

FIG. 3 illustrates an example of a user interface (UI) displayed by an electronic device 101 to install a package file, according to an embodiment. The electronic device 101 of FIG. 3 may be an example of the electronic device 101 of FIGS. 1 and/or 2. For example, the electronic device 101 and the display 210 of FIG. 2 may include the electronic device 101 and the display 210 of FIG. 3. Referring to FIG. 3, the electronic device 101 may be a terminal. For example, the terminal may include a personal computer (PC) such as a laptop and a desktop, a smartphone, a smart pad, and/or a tablet PC. The terminal may include smart accessories such as a smartwatch and/or a head-mounted device (HMD).

Referring to FIG. 3, different states 301 and 302 in which the electronic device 101 displays a screen to the user are illustrated. Hereinafter, the screen may refer to a user interface (UI) displayed in at least a part of the display. For example, the screen may include the activity of Android operating system. In the state 301, the electronic device 101 may display a screen to receive an input indicating installation of an application in the display 210. The state 301 may include a state in which a designated application (e.g., a store application) for downloading a package file (e.g., the package file 220 of FIG. 2 ) related to the application is executed, through a network connected to the electronic device 101. In the state 301, the electronic device 101 may display a visual object 310 having a form of a button, in the display 210. The visual object 310 may include a designated text (e.g., "installation") for guiding initiation of installation of an application corresponding to a screen displayed in the display 210.

In the state 301, the electronic device 101 may identify an input indicating installation of an application. The input may be identified by a gesture (e.g., a gesture of touching and/or clicking the visual object 310) indicating selection of the visual object 310. In response to the input, the electronic device 101 may request transmission (e.g. may send a request for transmission) of the package file corresponding to the input to an external electronic device (e.g., a server corresponding to the designated application) connected to the electronic device 101, by using a communication circuit (e.g., the communication circuit 215 of FIG. 2). The electronic device 101 may receive the package file from the external electronic device as a response to the request. According to an embodiment, the electronic device 101 may store the package file received through the communication circuit in the non-volatile memory (e.g., the non-volatile memory 134 of FIG. 2) of the electronic device 101. For example, the electronic device 101 may receive the package file corresponding to the visual object 310 based on the execution of an application for installation of the package file.

The electronic device 101 may install an application corresponding to the package file based on the package file received through the communication circuit. The state 302 may include a state of the electronic device 101 converted from the state 301 by an input indicating selection of the visual object 310. The state 302 may include a state of the electronic device 101 in which installation of the application is completed. In the state 302, the electronic device 101 may display a visual object 320 such as an icon representing an application corresponding to the input in the display 210. The visual object 320 may include a text indicating a name (e.g., package name) of the application along with the icon. Based on an input indicating selection of visual object 320, the electronic device 101 may execute an application. The execution of the application based on the visual object 320 may be performed based on a first launching process (e.g., the first launching process 232 of FIG. 2) executed by the electronic device 101.

During the change from state 301 to state 302, the electronic device 101 may execute instructions included in the package file based on a second launching process (e.g., the second launching process 234 of FIG. 2) different from the first launching process. For example, in response to completion of receiving (or downloading) of the package file through the communication circuit, the electronic device 101 may store or load instructions included in the package file stored in the non-volatile memory in the volatile memory (e.g., the volatile memory 132 in FIG. 2). The electronic device 101 may execute a process (e.g., the application process 242 of FIG. 2) in a second state different from a first state for displaying a screen in the display 210, based on the instructions stored in the volatile memory. Since the electronic device 101 executes the instructions included in the package file based on the second state, control of the display 210 based on the instructions may be limited while changing from the state 301 to the state 302.

Before displaying the visual object 320 (e.g., before the state 302), such as an icon representing an application corresponding to the visual object 310, the electronic device 101 may execute a process (e.g., the application process 242 of FIG. 2) related to the application based on the second state. For example, the electronic device 101 may display the visual object 320 in the display 210 after executing the process in the second state. For example, in response to completion of receiving the package file based on the input related to the visual object 310, the electronic device 101 may broadcast a message for notifying the completion of receiving the package file, based on the execution of a designated application for displaying the visual object 310. The broadcast may include an operation performed by the processor (e.g., the processor 120 of FIG. 2) of the electronic device 101 to exchange the messages between different processes. The message exchanged by the broadcast may include a designated text (e.g., 'ACTION PACKAGE ADDED') for notifying completion of receiving the package file. The message may include an identifier (e.g., a package name) assigned to the package file. The message may include a user's identifier (e.g., UID) related to receiving the package file. The electronic device 101 may launch an application process corresponding to the package file by executing the second launching process based on the message. The electronic device 101 may identify the package file based on parameters (e.g., the package name, and/or the UID) included in the message.

According to an embodiment, in a state of executing the second launching process based on the message, the electronic device 101 may launch an application process corresponding to the package file designated by the message, based on a condition designated by the second launching process. The designated condition may include whether another process generating the message (e.g., a process corresponding to the designated application generating the message based on the input related to the visual object 310) has authority to launch the application process. For example, when the other process generating the message does not have authority for executing the application process based on the second launching process, the electronic device 101 may refrain from launching the application process independently of generation of the message. The designated condition may include whether a UID (e.g., a UID uniquely assigned to the package file corresponding to the application process executed to generate the above message) assigned to the other process generating the message matches a UID of the package file corresponding to the message. For example, when the UID of the application process executed by selection of the visual object 310 matches the UID assigned to the package file, the electronic device 101 may refrain from launching the application process in response to the message. The designated condition may include whether the application process corresponding to the package file is launched. For example, when the application process is launched, the electronic device 101 may refrain from launching additional application processes corresponding to the package file based on the message. The designated condition may be related to a state of the electronic device 101 (e.g., memory load, temperature, and locked state). For example, when the temperature of the electronic device 101 identified based on data of a temperature sensor exceeds a designated threshold, the electronic device 101 may refrain from launching the application process corresponding to the message. For example, when the electronic device 101 is in a locked state, or in a state in which interaction between the user and the electronic device 101 is limited, such as a locked screen, the electronic device 101 may refrain from launching the application process corresponding to the message. The designated condition may include whether the package file corresponding to the message and/or the application corresponding to the package file are included in a designated list (e.g., a blocked list) of the second launching process. For example, when the application related to the message is included in the designated list, the electronic device 101 may refrain from launching the application process corresponding to the message. The designated condition may include whether the package file corresponding to the message is installed by a designated application (e.g., a setup wizard) for initialization of the electronic device 101. For example, when the package file corresponding to the message is installed by the setup wizard, the electronic device 101 may refrain from launching the application process independently of the message. The designated condition may be related to authority and/or type of the application corresponding to the message. For example, when the application corresponding to the message has a designated authority (e.g., a privileged permission), the electronic device 101 may refrain from launching the application process independently of the message. The designated authority may indicate that the package file corresponding to the message is stored in a designated directory in non-volatile memory (e.g., 'priv-app' directory) corresponding to the designated authority. For example, when the application corresponding to the message is an application debuggable by the user of the electronic device 101, the electronic device 101 may refrain from launching the application process independently of the message. The designated conditions may be related to the number and/or frequencies of application processes launched by the second launching process. For example, when application processes exceeding the designated number are executed by the second launching process, the electronic device 101 may refrain from launching additional application processes for executing the application corresponding to the message. For example, when messages exceeding the designated number are generated within a designated time interval, the electronic device 101 may refrain from launching application processes corresponding to each of the messages. A designated condition verified by the electronic device 101 to execute the application process based on the second launching process is not limited to the above example.

As described above, according to an embodiment, the electronic device 101 may identify whether to execute the application process corresponding to the package file based on the exemplified designated condition while installing the package file. Based on the designated condition, the electronic device 101 may adaptively change whether to execute the application process, according to the state of the electronic device 101. In a state of identifying that the application process is executed based on the designated conditions, the electronic device 101 may execute the application process corresponding to the package file based on the second launching process. The electronic device 101 may execute the application process in a designated state (e.g., the second state described above with reference to FIG. 2) in which access to the hardware of the electronic device 101 such as the display 210 is limited, by using the second launching process. For executing the application process, the electronic device 101 may store instructions included in the package file stored in non-volatile memory in volatile memory (e.g., caching). The second launching process may be a process different from the first launching process executed by the electronic device 101 for responding to an input indicating (or representing) selection of the visual object 320 (e.g. selecting the visual object by a touch input). Based on the execution of the application process, the electronic device 101 may obtain profile information (e.g., the profile information 225 of FIG. 2) corresponding to the package file.

Hereinafter, according to an embodiment, an example of an operation performed by the electronic device 101 based on the application process executed based on the second launching process will be described with reference to FIG. 4.

FIG. 4 illustrates an example of an operation performed by an electronic device based on an input for installing a package file, based on a time axis, according to an embodiment. The electronic device 101 of FIG. 4 may be an example of the electronic device 101 of FIG. 2. For example, the electronic device 101 and the display 210 of FIG. 2 may include the electronic device 101 and the display 210 of FIG. 4.

Referring to FIG. 4, in a time point t1 , the electronic device 101 may receive an input indicating installation of the package file 220 through the visual object 310. A state of the electronic device 101 may correspond to the state 301 of FIG. 3 within the time point t1. Based on the input, the electronic device 101 may download the package file 220 related to the application corresponding to the visual object 310.

Referring to FIG. 4, in a time point t2 after the time point 11, the electronic device 101 may complete the download of the package file 220. The package file 220 may be stored in the non-volatile memory (e.g., the non-volatile memory 134 of FIG. 2) of the electronic device 101 in the time point t2 in which the download of the package file 220 is completed. In the time point t2, the electronic device 101 may determine whether to execute the application corresponding to the package file 220. In the time point t2, the electronic device 101 may launch the application process 242 based on a state (e.g., a state referred by a designated text such as 'PRELAUNCH_STAGE_PREPARE') designated based on the second launching process. The designated state may include a state of the second launching process and/or the application process 242 to prepare for launching the application process 242.

In the designated state of the time point t2 preparing to launch the application corresponding to the package file 220, the electronic device 101 may identify a designated condition for executing the application, based on the execution of the second launching process (e.g., the second launching process 234 of FIG. 2). For example, the electronic device 101 may identify one or more designated conditions illustrated with reference to FIG. 3. The designated condition may be related to whether the profile information 225 corresponding to the package file 220 is stored in non-volatile memory. For example, when the profile information 225 (e.g., a file with a designated extension such as 'dm') corresponding to the package file 220 with the download of the package file 220 is received, the electronic device 101 may refrain from executing the application based on the second launching process. The designated condition identified in the time point t2 may be related to a history of executing an application based on the second launching process before the time point t2 by the electronic device 101. For example, the history may include a list of one or more applications launched by the second launching process before the time point t2 and being executed in the time point t2. When the number of applications included in the list exceeds a designated threshold, the electronic device 101 may refrain from executing the application corresponding to the package file 220 after the time point t2. For example, the history may include the number of attempts to launch the application by the second launching process within a time interval before the time point t2. For example, when the number of attempting to launch the application by the second launching process is greater than or equal to the designated threshold within the time interval including the time point t2, the electronic device 101 may refrain from executing the application corresponding to the package file 220.

When it is determined to execute the application corresponding to the package file 220 based on the designated condition, the electronic device 101 may cache instructions included in the package file 220. Instructions included in the package file 220 may be classified into a second type different from a first type readable by a processor (e.g., the processor 120 of FIG. 2) of the electronic device 101. For example, the instructions included in the package file 220 may include the second type of instructions to be simulated by a virtual machine process (e.g., the virtual machine process 244 of FIG. 2) executed by the electronic device 101. In order to execute instructions corresponding to the package file 220, the electronic device 101 may launch the virtual machine process corresponding to the package file 220.

Referring to FIG. 4, in a time point t3, the electronic device 101 may execute the application process 242 corresponding to the package file 220 based on caching of instructions included in the package file 220. Based on the caching of the instructions, the instructions in the package file 220 stored in the non-volatile memory may be copied to the volatile memory. Based on the second launching process, the electronic device 101 may generate a virtual display 410 used to drive the application process 242. The virtual display 410 may include a buffer (e.g., a frame buffer) formed in the volatile memory of the electronic device 101. The buffer may be distinguished from a buffer that matches a displaying area of display (e.g., the display 210 of FIG. 2) of the electronic device 101. For example, the virtual display 410 may be referred to as a virtual displaying area different from the displaying area of the display of the electronic device 101. The electronic device 101 may control the virtual display 410 different from the display of the electronic device 101 based on the execution of the application process 242, by matching the virtual display 410 and the application process 242.

According to an embodiment, the electronic device 101 may execute the application process 242 corresponding to the package file 220 in a second state different from a first state in which access to the hardware of the electronic device 101 is allowed for the application process. In order to execute the application process 242 in the second state, the electronic device 101 may adjust a state of a system process (e.g., notification manager, Bluetooth manager, camera service, network manager, vibration manager, audio manager, and/or connectivity manager) reacting with the application process 242 to a designated state that refrains from controlling the hardware of the electronic device 101 based on an application programming interface (API) called by the application process 242. The embodiment is not limited thereto, and for example, the second state may include a state in which access to the network by the application process 242 is conditionally allowed based on unmetered Wi-Fi.

Since the application process 242 is executed based on the virtual display 410 in the time point t3, the electronic device 101 may control the virtual display 410 among the virtual display 410 and the display 210, based on the application process 242. For example, the electronic device 101 may execute the application process 242 based on a second state different from a first state for directly controlling the display 210. For example, a screen corresponding to the application process 242 may not be displayed through the display 210 in the time point t3. The second state, which is a state of the application process 242 launched by the second launching process, may include a state in which displaying the screen on the display 210 of the electronic device 101 is blocked or limited. For example, the electronic device 101 may execute the application process 242 executed in the second state, independently of a screen (e.g., activity) displayed through the display 210. The second state may include a state in which at least a part of volatile memory is allocated for execution of the application process 242.

In the time point t3, a state of the application process 242 executed by the electronic device 101 may correspond to a designated state (e.g., a state referred by designated text such as 'PRELAUNCH_STAGE_START') indicating that the launch of the application process 242 is completed. Since the application process 242 is executed in a designated state (e.g., the second state) in which interaction with the user is limited based on the second launching process, the electronic device 101 may refrain from outputting a sound, a notification (e.g., toast notification), and/or a log generated by the launch of the application process 242. In the time point t3 where the application process 242 is launched, the electronic device 101 may monitor one or more instructions executed by the application process 242 among instructions included in the package file 220. The electronic device 101 may obtain the profile information 225 including information monitoring the one or more instructions. For groups of instructions included in the package file 220, the profile information 225 may include information for identifying at least one group executed by the processor of the electronic device 101 based on the execution of the application process 242 in the second state. For example, the profile information 225 may include information for selectively compiling at least one of the groups. The profile information 225 may be updated by the electronic device 101 while the application process 242 is being executed.

As at the time point t3, when executing the application process 242, the electronic device 101 may additionally execute a designated process (e.g., a prelaunch watchdog process) to monitor an execution state of the application process 242. The designated process may be executed by the second launching process. The electronic device 101 may obtain whether to terminate the application process 242 based on the execution state of the application process 242 monitored by the designated process. For example, when an input indicating to execute an application corresponding to the application process 242 is not received within a designated interval after the time point t3, the electronic device 101 may at least temporarily refrain from executing the application process 242 based on the designated process. While the state of the application process 242 corresponds to the designated state (e.g., a state referred by designated text such as 'PRELAUNCH_STAGE_PREPARE') related to the launch of the process, the designated process may be executed by the electronic device 101. When it is determined to terminate the application process 242 based on the designated process, the electronic device 101 may release occupied area for the execution of the application process 242 in the volatile memory. Based on the release of the area, the electronic device 101 may prevent leakage of the volatile memory related to the execution of the application process 242. The leakage of the volatile memory may occur as the area in the volatile memory is maintained independently of the termination of the application process 242.

The electronic device 101 may release the virtual display 410 after launching the application process 242. For example, the virtual display 410 may be used for launching the application process 242. Based on the release of the virtual display 410, the state of the application process 242 may be switched from a designated state (e.g., 'PRELAUNCH_STAGE_START') indicating the execution of the application process 242 to another designated state (e.g., a state referred by designated text such as 'PRELAUNCH_STAGE_TASKREMOVING') for releasing the virtual display 410. Based on the release of the virtual display 410, the application process 242 may be changed into an empty process. With the release of the virtual display 410, the second launching process may remove or stop a task related to the application process 242. After the virtual display 410 is released, the state of the application process 242 may be switched to still another designated state (e.g., a state referred by designated text such as `PRELAUNCH_STAGE_TASKREMOVED') indicating that the release of the virtual display 410 is completed.

After the application process 242 is changed to an empty process, the electronic device 101 may store the profile information 225 obtained based on the execution of the application process 242 in the non-volatile memory. The profile information 225 stored in the non-volatile memory may be used for optimization of the package file 220. The electronic device 101 may perform optimization of the package file 220 based on the profile information 225 according to a priority higher than optimization of another package file different from the package file 220. The optimization of the package file 220 by the electronic device 101 may be performed by a process (e.g., the optimized process 250 of FIG. 2 ) related to the optimization. An operation in which the electronic device 101 optimizes the package file 220 based on the profile information 225 will be described with reference to FIG. 6.

After the virtual display 410 is released, the electronic device 101 may identify whether to terminate the application process 242 changed into the empty process based on the second launching process and/or the designated process (e.g., the prelaunch watchdog process). For example, the application process 242 may continue to be executed by the electronic device 101 as the empty process, independently of release of the virtual display 410. For example, the electronic device 101 may identify a period during which the application process 242 was executed based on the designated process. When the period exceeds the designated threshold, the electronic device 101 may terminate the application process 242. The state of the application process 242 may be switched to a designated state (e.g., a state referred by designated text such as 'PRELAUNCH_STAGE FINISHED') indicating the termination of the application process 242 by the electronic device 101.

After the electronic device 101 executes the application process 242 based on the second launching process, the application process 242 may be terminated based on whether an error is generated based on execution of the application process 242. When the application process 242 is terminated based on the generation of the error, the electronic device 101 may add the application process 242 and/or the package file 220 to a list of the second launching process (e.g., the blocked list described with reference to FIG. 3). For example, package name of the package file 220 may be added to the list.

Referring to FIG. 4, in a time point t4 after the time point t3 when the application process 242 is executed by the electronic device 101, the electronic device 101 may display a visual object 320 including an icon representing an application corresponding to the application process 242 through the display 210 of the electronic device 101. Referring to FIG. 4, the electronic device 101 may execute the application process 242 before the time point t4 displaying the visual object 320. For example, before the time point t4, the application process 242 having package name of the package file 220 may be executed or searched by the processor of the electronic device 101. For example, the electronic device 101 may display the visual object 320 in the display 210 of the electronic device 101 after executing the application process 242 in the second state. In response to an input indicating selection of the visual object 320, the electronic device 101 may change a state of the application process 242 that was being executed before the time point t4 from the second state to the first state.

In response to an input indicating selection of the visual object 320, the electronic device 101 may obtain a screen corresponding to the input based on the application process 242 switched to the first state. Referring to FIG. 4, in a time point t5 after a time point at which the input is identified (or detected), the electronic device 101 may display a screen corresponding to the input in the display 210. For example, the electronic device 101 may change a state of the application process 242 to a first state which directly controlling hardware of the electronic device 101 including the display 210 is allowed, based on the first launching process (e.g., the first launching process 232 of FIG. 2). The electronic device 101 may identify a state of the application process 242 corresponding to the visual object 320 selected by the input and executed by the second launch process, by executing the first launching process in response to the input. The electronic device 101 may identify whether the application process 242 is being executed based on UID of an application corresponding to the visual object 320. When a state of the application process 242 executed by the second launching process corresponds to unterminated state (e.g., the second state), the electronic device 101 may change a state of the application process 242 to another state (e.g., the first state) in which access to the hardware (e.g., the display 210) included in the electronic device 101 is allowed for the application process 242.

In the time point t4 received the input indicating to select the visual object 320, the electronic device 101 may switch a state of the application process 242 to a designated state (e.g., a state referred by designated text such as 'PRELAUNCH_STAGE_USERSTARTED') indicating that the application process 242 is initiated by the user. Switching the state of the application process 242 to the designated state indicating initiation of the application process 242 may be related to at least one of whether the application process 242 is launched by the second launching process, or whether execution of the application process 242 is interrupted (e.g., interruption by the prelaunch watchdog process) in the time point t4 when the input is received. For example, in case that the application process 242 has not been launched by the second launching process, or after the application process 242 has been interrupted by the prelaunch watchdog process, in response to the input, the electronic device 101 may generate and execute another process corresponding to the visual object 320, independently of the application process 242.

Referring to FIG. 4, in a time point t5 after the time point t4 receiving an input indicating to select the visual object 320, the electronic device 101 may display a screen corresponding to the input in the display 210 based on the application process 242 switched to the first state. In response to the input, the electronic device 101 may display the application process 242 switched to the first state and a screen corresponding to the input in the display 210. In response to an input indicating to select (or, in other words, indicating selection of) the visual object 320 and indicating execution of an application corresponding to the package file 220, the electronic device 101 may display a screen corresponding to the input in the display 210, based on switching a state of the application process 242 from the second state to the first state. Based on a state of the application process 242 being switched to the first state in which displaying a screen in the display 210 is allowed, the electronic device 101 may discard the application process 242 from a list of the second launching process (e.g., a list of one or more processes executed in the second state).

While interacting with the user based on the application process 242 as at the time point t5, the electronic device 101 may update the profile information 225 corresponding to the application process 242, based on at least one function of the application process 242 executed by the user. For example, the electronic device 101 may update the profile information 225 based on the application process 242 switched to the first state by the input indicating to select the visual object 320. For example, the profile information 225 may include information for distinguishing at least one group called by the application process 242 executed using the virtual display 410, such as at the time point t3, and at least one group called by the application process 242 executed using the display 210, such as at the time point t5, from other groups, among groups of instructions included in the package file 220.

After the time point t5, the electronic device 101 may terminate the application process 242 based on the interaction between the user and the electronic device 101. Based on terminating the application process 242, a state of the application process 242 may be switched to a designated state (e.g., a state referred by designated text such as 'PRELAUNCH_STAGE_KILLED') indicating the termination of the application process 242. The termination of the application process 242 may be performed based on execution of a designated process such as the prelaunch watchdog process, or may be performed in response to an input indicating the termination of the application process 242.

As described above with reference to FIG. 4, according to an embodiment, the electronic device 101 may launch the application process 242 corresponding to the package file 220 while installing the package file 220, independently of an input indicating to select the visual object 320 including an icon related to the package file 220. Based on the launched application process 242, the electronic device 101 may obtain the profile information 225 used for optimizing the package file 220. Based on a designated condition for optimizing the package file 220, the electronic device 101 may compile at least one of a second type of instructions included in the package file 220, by executing the optimized process (e.g., the optimized process 250 of FIG. 2). The designated condition may include at least one of a temperature of the electronic device 101, a history in which interaction between the electronic device 101 and the user occurs, and a state of the electronic device 101 (e.g., a state in which the display 210 is deactivated). For example, in a time interval in which the electronic device 101 is not used by the user, the electronic device 101 may obtain an optimized file (e.g., the optimized file 260 of FIG. 2) corresponding to the package file 220 and the profile information 225, by executing the optimized process. The electronic device 101 may preferentially optimize the package file 220 among a plurality of package files installed in the electronic device 101, by executing the optimized process based on the second launching process.

As described above, according to an embodiment, the electronic device 101 may launch the application before the second input, based on a probability that a first input for installing the package file 220 and a second input for launching an application related to the package file 220 occur sequentially. Based on launching the application, the electronic device 101 may generate and execute a process (e.g., the application process 242) corresponding to the package file 220. Based on executing the process, the electronic device 101 may obtain the profile information 225 used for optimizing the package file 220 before the second input. Based on obtaining the profile information 225 before the second input, the electronic device 101 may perform optimization on the package file 220 more quickly. The electronic device 101 may respond more quickly to the second input based on the application process 242 in the second state. For example, in response to the second input, the electronic device 101 may display more quickly a screen in the display 210 based on the application process 242 executed before the second input.

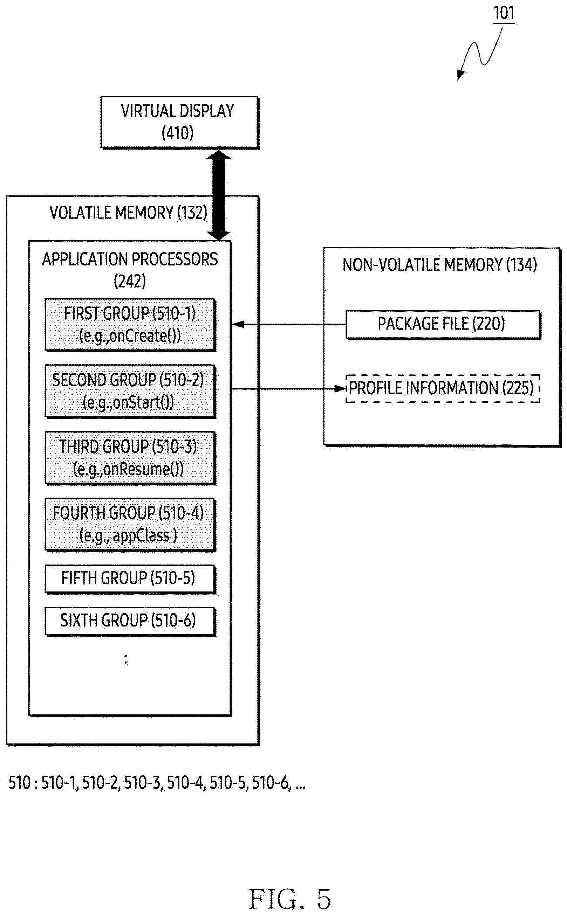

Hereinafter, referring to FIG. 5, as shown in the time point t3, an example of an operation in which the electronic device 101 obtains the profile information 225 in the second state of executing the application process 242 based on the virtual display 410 will be described.

FIG. 5 illustrates an example of an operation in which an electronic device 101 obtains profile information 225 based on execution of a process (e.g., the application process 242) corresponding to a package file 202, according to an embodiment. The electronic device 101 of FIG. 5 may be an example of the electronic device 101 of FIG. 2. For example, the electronic device 101, the display 210, the volatile memory 132, the non-volatile memory 134, the application process 242, the package file 220, and the profile information 225 of FIG. 2 may include the electronic device 101, display 210, volatile memory 132, non-volatile memory 134, application process 242, package file 220, and profile information 225 of FIG. 5.

Referring to FIG. 5, according to an embodiment, the electronic device 101 may execute the application process 242 corresponding to the package file 220 based on the virtual display 410. The electronic device 101 may execute the application process 242 corresponding to the package file 220 based on downloading the package file 220, in a second state different from a first state in which displaying a screen in a display (e.g., the display 210 of FIG. 2) of the electronic device 101 is allowed. The electronic device 101 may execute the application process 242 based on receiving the package file 220 among the package file 220 and the profile information 225. The electronic device 101 may bypass the execution of the application process 242 corresponding to the package file 220 in a state of identifying the profile information 225 corresponding to the package file 220. For example, the electronic device 101 may obtain the first type of instructions from the second type of instructions included in the package file 220, by optimize the package file 220 based on the profile information 225.

Based on the launch of the application process 242, the electronic device 101 may form an area corresponding to the application process 242 in the volatile memory 132. The electronic device 101 may cache the second type of instructions included in the package file 220 in the area formed in the volatile memory 132. Referring to FIG. 5, the second type of instructions cached in the area may be distinguished into groups 510 (e.g., first group 510-1, second group 520-2, third group 510-3, fourth group 510-4, fifth group 510-5, sixth group 510-6). Groups for distinguishing instructions may correspond to a method, a routine, a sub-routine, and/or a class.

According to an embodiment, the electronic device 101 may select a state of the application process 242 as a second state in which access to the hardware of the electronic device 101 including the display is limited, among different states distinguished by the rows in Table 1.

**[Table 1]**

| State name | Name of method executed |
|---|---|
| Foreground process | onCreate, onStart, onResume |
| Visible process | onPause |
| Service process | startService |
| Background process | onStop |
| Empty process | onDestroy |

The second column (Name of method executed) of Table 1 may indicate one or more methods executed in each of the states of Table 1 based on a life cycle of application. The foreground process in Table 1 may refer to a state of a process in which a screen is displayed through a display (e.g., the display 210 in FIG. 2) of the electronic device 101, and executed to display a screen (e.g., activity) for interacting with a user of the electronic device 101. The visible process in Table 1 may refer to a state of a process being executed to display another screen occluded by the screen of the foreground process. The service process in Table 1 may refer to a state of a process executed based on a call of a method having a designated name such as startService, independently of a screen displayed through the display. The background process in Table 1 may include a state of a process being executed to display a screen invisible by the user of the electronic device 101. The empty process in Table 1 may include a state of a process which is the life cycle is terminated and cached in the volatile memory 132. The second state of the application process 242 executed based on the virtual display 410 may include the empty process and/or the background process among the states in Table 1.

Different states included in Table 1 may be related to a possibility of termination by the processor of the electronic device 101. The electronic device 101 may preferentially terminate a process in a state in which the possibility is relatively high among the different states, based on a degree to which resources of the electronic device 101 are occupied. For example, among the states, a possibility in which the foreground process will be terminated may be the lowest. For example, a possibility in which the background process and/or the empty process will be terminated may be the highest. A possibility in which the application process 242 executed in the second state including the background process and/or the empty process will be terminated may be higher than a possibility in which other processes, including the foreground process, executed in the first state will be terminated.

In a state in which the application process 242 is executed based on the virtual display 410, the electronic device 101 may execute instructions included in groups corresponding to designated methods for displaying a screen on the virtual display 410, among the groups 510 of instructions stored in the volatile memory 132. Referring to the foreground process in Table 1, the electronic device 101 may execute designated methods having names of onCreate, onStart, and onResume, in order to display a screen within the display. According to an embodiment, the electronic device 101 may execute the designated methods executed to display the screen among the groups 510 of instructions related to the application process 242. Based on the execution of the designated methods, the electronic device 101 may identify at least one group executed by the application process 242 among the groups 510.

Referring to FIG. 5, in a state in which the designated methods is executed in order to display a screen on the virtual display 410, the electronic device 101 may execute instructions in a first group 510-1 corresponding to a designated method having a name of onCreate. For example, the electronic device 101 may execute instructions within a second group 510-2 and a third group 510-3 corresponding to each of designated methods having name of onStart and onResume. The electronic device 101 may execute instructions in the first group 510-1 to the third group 510-3 based on the virtual display 410 corresponding to the application process 242. When instructions in the first group 510-1 to the third group 510-3 are related to other methods and/or classes different from the designated methods, the electronic device 101 may execute instructions in groups corresponding to the other methods and/or the classes. Referring to FIG. 5, the electronic device 101 may execute instructions in a fourth group 510-4 related to a specific class, in a state in which the designated methods is executed. For example, in the state, the electronic device 101 may identify that the first group 510-1 to the fourth group 510-4 are executed among the groups 510 of instructions.

According to an embodiment, in order to display a screen on the virtual display 410, the electronic device 101 may store a result of executing instructions related to the designated methods, other methods related to the designated methods, and/or instructions related to the class in the profile information 225. For example, the profile information 225 may include information indicating that the first group 510-1 to the fourth group 510-4 are executed, among the groups 510 of instructions cached in the volatile memory 132 by launching the application process 242. For example, the profile information 225 may include one or more parameters indicating frequencies at which each of groups 510 is called by the application process 242. The electronic device 101 may obtain the profile information 225 used for compiling the second type of instructions (e.g., instructions included in groups 510 cached in the volatile memory 132) included in the package file 220, based on the execution of the application process 242 in the second state related to the virtual display 410.

As described above, according to an embodiment, the electronic device 101 may execute at least one of groups 510 of instructions related to the application process 242 based on the virtual display 410. The electronic device 101 may execute one or more instructions related to designated methods (e.g., on Create, onStart, onResume) for displaying the screen using the virtual display 410, independently of displaying of the screen being limited based on the application process 242. The electronic device 101 may obtain the profile information 225 indicating at least one group including the one or more instructions among the groups 510. The electronic device 101 may store the profile information 225 in the non-volatile memory 134.

According to an embodiment, the electronic device 101 may optimize the package file 220 based on the profile information 225 obtained based on the application process 242 executed using the virtual display 410. Based on optimizing for the package file 220, the electronic device 101 may reduce the time required to launch an application related to the package file 220. Hereinafter, referring to FIG. 6, according to an embodiment, an example of an operation in which the electronic device 101 performs optimization of the package file 220 using the profile information 225 stored in the non-volatile memory 134 based on the operation of FIG. 5 will be described.

FIG. 6 illustrates an example of an operation in which an electronic device 101 performs a compilation for at least one of instructions included in a package file 220 based on profile information 225, according to an embodiment. The electronic device 101 of FIG. 6 may be an example of the electronic device 101 of FIG. 2. For example, the electronic device 101, the volatile memory 132, the non-volatile memory 134, the package file 220, the profile information 225, and the optimized file 260 of FIG. 2 may include an electronic device 101, a volatile memory 132, a non-volatile memory 134, a package file 220, profile information 225, and an optimized file 260 of FIG. 6.

Referring to FIG. 6, according to an embodiment, the electronic device 101 may identify the package file 220 and the profile information 225 from the non-volatile memory 134. An exemplary state of FIG. 6 in which the profile information 225 is stored in the non-volatile memory 134 may include a state after obtaining the profile information 225 based on the execution of the application process 242 of FIG. 2 to FIG. 5. According to an embodiment, the electronic device 101 may optimize the package file 220 by executing the optimized process 250 based on a designated condition. Whether the designated condition for executing the optimized process 250 is satisfied may be identified by a designated process such as a job scheduler executed by the electronic device 101. The designated condition may include at least one of whether a battery of the electronic device 101 is being charged, whether a temperature of the electronic device 101 is less than a designated threshold, whether a designated period has arrived after interaction between the electronic device 101 and the user is stopped, or whether a display of the electronic device 101 is deactivated.

According to an embodiment, the electronic device 101 may sequentially optimize a plurality of package files including the package file 220 based on the execution of the optimized process 250. The order in which the electronic device 101 optimizes the plurality of package files may be adjusted based on whether the profile information 225 is obtained by the execution of application process (e.g., the application process 242 of FIGS. 2 to 5) in the second state. For example, in a state of executing the optimized process 250, the electronic device 101 may identify the profile information 225 obtained by the application process in the second state and the package file 220 corresponding to the profile information 225, based on the information obtained by the second launching process (e.g., the second launching process 234 of FIG. 2). The order of optimizing the package file 220 corresponding to the profile information 225 obtained by the application process in the second state may have a priority higher than other package files within the order.

When the electronic device 101 obtains a plurality of profile information based on a plurality of application processes, a priority of a plurality of package files corresponding to each of the plurality of profile information may depend on whether the plurality of application processes is switched to the first state by an input (e.g., an input indicating to execute the application) of the user. For example, among the plurality of package files, a priority of a specific package file related to a specific application launched by the input may have a priority higher than other package files within the order.

According to an embodiment, the electronic device 101 may selectively perform compilation for the second type of instructions based on the group 510 of the second type of instructions included in the package file 220. The electronic device 101 may perform compilation of at least one of groups 510 of the second type of instructions included in the package file 220 based on the profile information 225. For example, when it is identified that the instructions in the first group 510-1 to fourth group 510-4 are executed by the application process, the electronic device 101 may perform compilation for instructions in the first group 510-1 to the fourth group 510-4 among the groups 510, based on the profile information 225.

Referring to FIG. 6, the electronic device 101 may obtain an optimized file 260 used for executing an application corresponding to the package file 220, by compiling at least one of the second type of instructions included in the package file 220 based on the profile information 225. The electronic device 101 may store the optimized file 260 in the non-volatile memory 134. The optimized file 260 may be stored in a part of the non-volatile memory 134 mapped to a partition designated by the operating system of the electronic device 101 and for storing the optimized file. The optimized file 260 may have a designated extension (e.g., 'oat', and/or 'odex').

Referring to FIG. 6, the optimized file 260 obtained by the electronic device 101 by compiling instructions in the first group 510-1 to the fourth group 510-4 among the groups 510 of instructions in the package file 220 is illustrated as an example. The optimized file 260 may include groups 610 of instructions, corresponding to each of groups 510 of instructions included in the package file 220. A first group 610-1 to a fourth group 610-4 of the optimized file 260 corresponding to the first group 510-1 to the fourth group 510-4 in the package file 220 may include the first type of instructions (e.g., native code) directly readable by the processor (e.g., the processor 120 of FIG. 2) of the electronic device 101 by the compilation. In the optimized file 260, other group (e.g., a fifth group 610-5 to a sixth group 610-6) different from the first group 610-1 to the fourth group 610-4 may include the second type of instructions (e.g., byte code) readable by the virtual machine process (e.g., the virtual machine process 244 of FIG. 2).

The optimized file 260 stored in the non-volatile memory 134 may be used to launch an application related to the package file 220. After obtaining the optimized file 260 of FIG. 6, in response to an input indicating to execute the application (e.g., an input indicating to select the visual object 320 of FIG. 3), the electronic device 101 may load instructions included in the optimized file 260, among the optimized file 260 and the package file 220, into the volatile memory 132. Based on the instructions loaded into the volatile memory 132, the electronic device 101 may execute a process corresponding to the application. Referring to FIG. 6, since the first group 610-1 to the fourth group 610-4 including the native code are inputted independently of the virtual machine process to the processor of the electronic device 101 based on the execution of the above process in the optimized file 260, the electronic device 101 may perform more quickly a function (e.g., a function for displaying a screen on the display of electronic devices 101) related to the first group 610-1 to the fourth group 610-4.

As described above, according to an embodiment, while installing the package file 220, the electronic device 101 may obtain the profile information 225 corresponding to the package file 220 by using a process (e.g., the application process 242 of FIGS. 2 to 5) in the second state in which access to the resources of the electronic device 101 is limited. The process in the second state may be used to respond to an input for launching an application corresponding to the package file 220 after the package file 220 is installed, along with being used to obtain the profile information 225. For example, the profile information 225 obtained by the process in the second state may be used for selective compilation and/or optimization of the second type of instructions included in the package file 220.

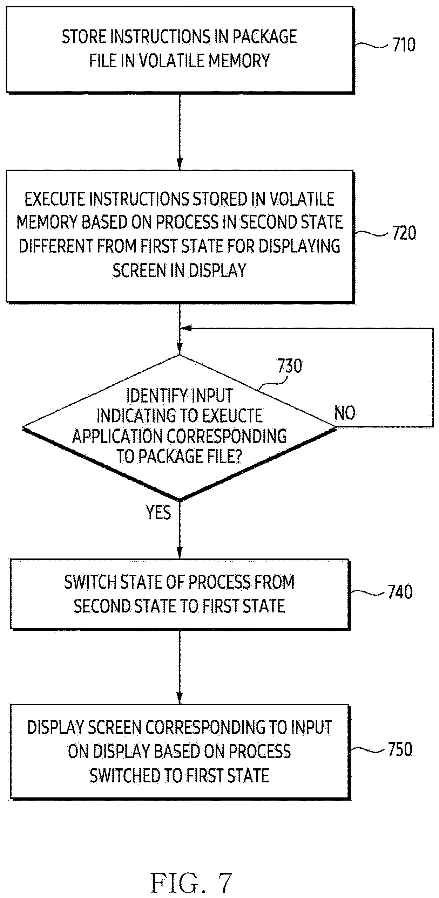

Hereinafter, according to an embodiment, an example of operations performed by the electronic device 101 will be described with reference to FIGS. 7 to 9.

FIG. 7 illustrates an example of a flowchart for describing an operation of an electronic device, according to an embodiment. The electronic device of FIG. 7 may include the electronic device 101 of FIGS. 1 to 6. An operation of FIG. 7 may be performed by the electronic device 101 and the processor 120 of FIG. 2.

Referring to FIG. 7, in operation 710, according to an embodiment, the electronic device may store instructions in the package file in the volatile memory. The package file may include the package file 220 of FIG. 2. Based on operation 710, the electronic device may store instructions in the package file received through a communication circuit (e.g., the communication circuit 215 of FIG. 2) or stored in a non-volatile memory (e.g., the non-volatile memory 134 of FIG. 2) in the volatile memory (e.g., the volatile memory 132 in FIG. 2). Operation of storing the instructions in operation 710 in the volatile memory may include operation of caching the instructions. Based on operation 710, instructions included in the package file and having a second type different from a first type directly readable by the processor may be stored in the volatile memory.

Referring to FIG. 7, in operation 720, according to an embodiment, the electronic device may execute instructions stored in the volatile memory based on a process of a second state different from a first state for displaying a screen in the display (e.g., the display 210 of FIG. 2). The second state may include the background process and/or the empty process among the states in Table 1. The process in the second state executed based on operation 720 may include the application process 242 of FIG. 2. The electronic device may obtain profile information (e.g., the profile information 225 of FIG. 2) corresponding to the package file of operation 710, by executing the process based on a virtual displaying area (e.g., the virtual display 410 of FIG. 4) different from displaying area of the display 210. After executing the process of operation 720, the electronic device may display a visual object (e.g., the visual object 320 of FIG. 3) representing an application corresponding to the package file based on an icon included in the package file in the display.

Referring to FIG. 7, in operation 730, according to an embodiment, the electronic device may identify an input indicating to execute an application corresponding to the package file. The input may be identified by a gesture indicating that an icon representing the application is selected, such as the visual object 320 of FIG. 3 (a touch input to an icon of the application). In a state in which the input is identified (730-YES), the electronic device may switch a state of a process of operation 720 from the second state to the first state, based on operation 740. As a state of the process is switched to the first state, control of the hardware in the electronic device 101 based on execution of the process may be allowed for the application.

Referring to FIG. 7, in operation 750, according to an embodiment, the electronic device may display a screen corresponding to an input on the display based on the process switched to the first state. For example, such as at the time point t5 in FIG. 4, the electronic device may display a screen obtained by the execution of the process in the display. Based on the process of the first state, the electronic device may execute at least one function for interacting with the user based on the application.

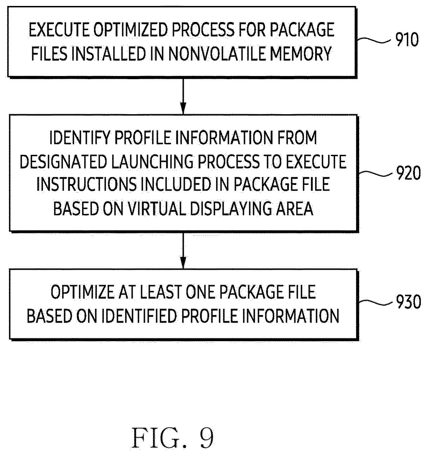

Based on the process of the second state executed based on operation 720, the electronic device may obtain profile information corresponding to a package file in operation 710. Based on obtaining the profile information independently of the operations of FIG. 7, the electronic device may perform optimization of the package file based on the profile information. An operation of performing the optimization by the electronic device may include operation described above with reference to FIG. 6. An operation in which the electronic device optimizes the package file based on the profile information will be described with reference to FIG. 9.

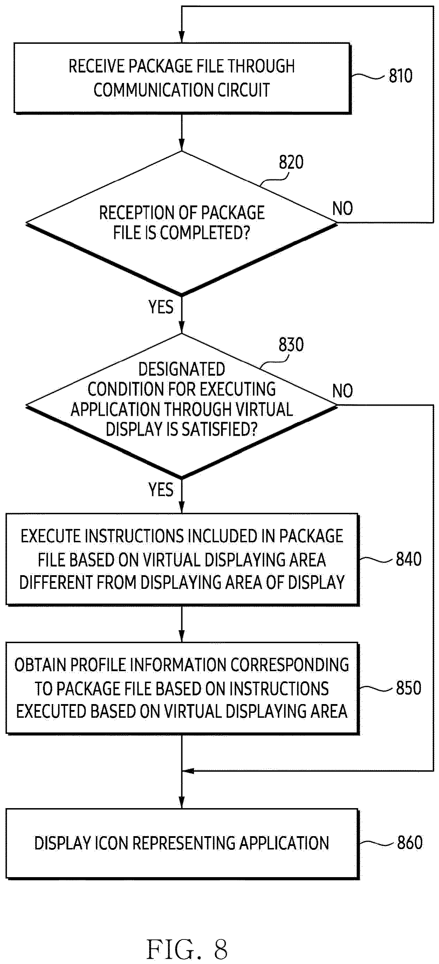

FIG. 8 illustrates an example of a flowchart for describing an operation of an electronic device, according to an embodiment. The electronic device of FIG. 8 may include the electronic device 101 of FIGS. 1 to 6. The operation of FIG. 8 may be performed by the electronic device 101 and the processor 120 of FIG. 2. At least one of the operations of FIG. 8 may be related to at least one of the operations of FIG. 7.

Referring to FIG. 8, in operation 810, according to an embodiment, the electronic device may receive a package file (e.g., the package file 220 of FIG. 2) through a communication circuit (e.g., the communication circuit 215 of FIG. 2). In operation 820, according to an embodiment, the electronic device may determine whether reception of the package file is completed. Before the reception of the package file is completed (820-NO), the electronic device may maintain receiving the package file based on operation 810.

In a state of identifying that the reception of the package file is completed (820-YES), based on operation 830, according to an embodiment, the electronic device may determine whether a designated condition for executing an application for the package file through a virtual display (e.g., the virtual display 410 of FIG. 4) is satisfied. The designated condition may include a designated condition for launching a process (e.g., the application process 242 of FIG. 2) corresponding to the package file based on the second launching process (e.g., the second launching process 234 of FIG. 2) described with reference to FIG. 3. The designated condition may be related to a package file and a resource of an electronic device. When profile information is received along with the package file in operation 810 or the designated conditions are not satisfied (830-NO), the electronic device may bypass the launch of the process.

In a state in which a designated condition in operation 830 is satisfied (830-YES), based on operation 840, the electronic device may execute instructions included in the package file based on a virtual displaying area (e.g., the virtual display 410 of FIG. 4) different from a displaying area of the display (e.g., the display 210 of FIG. 2). The electronic device may execute the instructions in a second state in which access to other hardware different from the processor of the electronic device is limited. The electronic device may perform operation 840 similar to operation 720 of FIG. 7.

Referring to FIG. 8, in operation 850, according to an embodiment, the electronic device may obtain profile information corresponding to the package file based on instructions executed based on the virtual displaying area. The electronic device may identify at least one instruction executed by the designated methods among the instructions included in the package file, by calling designated methods (e.g., designated methods having designated names such as onCreate, onStart, and/or onResume) to display a screen in the virtual displaying area. The electronic device may obtain the profile information to selectively perform compilation for the at least one instruction among the instructions.

Referring to FIG. 8, in operation 860, according to an embodiment, the electronic device may display an icon representing an application corresponding to the package file in operation 810. The icon may include the visual object 320 of FIG. 3. Based on an input indicating to select the icon, the electronic device may launch the application. Referring to FIG. 8, before displaying an icon in operation 860, the electronic device may launch an application related to the icon. Based on the launch of the application, the electronic device may obtain profile information used to optimize the package file corresponding to the application before receiving an input related to the icon.

FIG. 9 illustrates an example of a flowchart for describing an operation of an electronic device, according to an embodiment. The electronic device of FIG. 9 may include the electronic device 101 of FIGS. 1 to 6. The operation of FIG. 9 may be performed by the electronic device 101 and the processor 120 of FIG. 2. At least one of the operations of FIG. 9 may be related to at least one of the operations of FIGS. 7 to 8.

Referring to FIG. 9, in operation 910, according to an embodiment, the electronic device may execute an optimized process (e.g., the optimized process 250 of FIG. 2) for package files installed in non-volatile memory. The optimized process may be conditionally executed by an electronic device based on a designated process such as a job scheduler.

Referring to FIG. 9, in operation 920, according to an embodiment, the electronic device may identify profile information from the designated launching process (e.g., the second launching process 234 of FIG. 2) to execute instructions included in the package file based on the virtual displaying area. For example, the electronic device may obtain profile information (e.g., the profile information in FIG. 2) identified based on the application process (e.g., the application process 242 in FIG.2) executed by the designated launching process, and a package file corresponding to the profile information (e.g., the package file 220 of FIG. 2).

Referring to FIG. 9, in operation 930, according to an embodiment, the electronic device may optimize at least one package file based on the identified profile information. The electronic device may obtain an optimized file (e.g., the optimized file 260 of FIG. 2) including the first type of instructions, by compiling at least one of the second type of instructions included in the package file based on operation above-described with reference to FIG. 6. The order in which the electronic device optimizes the package files may be adjusted so that the package files corresponding to the profile information identified by the designated launching process in operation 920 have a relatively high priority. For example, the package file corresponding to the profile information identified by the designated launching process may be optimized first.

While the electronic device installs the package file, a method for obtaining profile information used for optimizing the package file may be required. As described above, according to an embodiment, an electronic device (e.g., the electronic device 101 in FIG. 2) may include a non-volatile memory (e.g., the non-volatile memory 134 in FIG. 2), a volatile memory (e.g., volatile memory 132 in FIG. 2), a display (e.g., the display 210 in FIG. 2), a communication circuit (e.g., the communication circuit 215 in FIG. 2), and a processor (e.g., the processor 120 in FIG. 2). The processor may be configured to store, in the volatile memory, instructions included in a package file (e.g., the package file 220 of FIG. 2) which is stored in the non-volatile memory, and is received through the communication circuitry. The processor may be configured to execute, based on the instructions stored in the volatile memory, a process in a second state different from a first state for displaying a screen in the display . The processor may be configured to display, in the display in response to an input indicating execution of a process corresponding to the package file, the screen corresponding to the application by switching a state of the process from the second state to the first state. The electronic device may be configured to display a screen corresponding to the input more quickly, based on the process executed before the input indicating to execute the application corresponding to the package file. The electronic device may obtain profile information corresponding to the package file before the input based on the process.

For example, the processor may be configured to display, in the display after executing the process in the second state, an icon representing the application corresponding to the package file.

For example, the processor may be configured to display, in response to the input indicating to select the icon, the screen corresponding to the input and the process switched to the first state, in the display.

For example, the processor may be configured to store, based on a second system process different from a first system process for executing the application based on the input, the instructions in the non-volatile memory in the volatile memory.

For example, the processor may be configured to execute, based on a virtual machine process for controlling the processor based on instructions in a second type different from instructions in a first type executable by the processor, a process in the second state from the instructions stored in the volatile memory.

For example, the processor may be configured to obtain, based on executing the process in the second state, profile information (e.g., the profile information 225 in FIG. 2) used to compile for the instructions in the second type included in the package file.

For example, the processor may be configured to obtain, by compiling at least one of the instructions in the second type included in the package file based on the profile information, an optimized file (e.g., the optimized file 260 in FIG. 2) used for executing the application. The processor may be configured to store the optimized file in the non-volatile memory.

For example, the processor may be configured to identify, by executing the process in the second state based on a virtual displaying area different from a displaying area of the display, at least one group executed by the second process in the second state among groups of the instructions included in the package file.

For example, the processor may be configured to obtain profile information for compiling the at least one identified group among the groups.

For example, the processor may be configured to update, based on the process switched to the first state based on the input, the profile information.

For example, the first state may comprise a state in which controlling at least one of the display or the communication circuit is allowed based on executing the process.

For example, the processor may be configured to obtain, based on executing the process in the second state, profile information indicating frequencies that distinct groups of the instructions included in the package file are called by the process in the second state.

For example, the processor may be configured to receive, based on executing the second application different from the application that is a first application, the package file through the communication circuit.

As described above, according to an embodiment, a method of an electronic device may comprise receiving, through a communication circuitry of the electronic device, a package file of an application, including instructions in a second type different from instructions in a first type directly readable by a processor of the electronic device. The method may comprise identifying profile information corresponding to the package file in a first state in which accessing to a resource of the electronic device different from the processor is permitted. The method may comprise obtaining instructions in the first type from the instructions in the second type included in the package file based on the profile information. The method may comprise executing at least one of the instructions in the second type included in the package file, based on a process of which a state is corresponding to the second state different from the first state. The method may comprise obtaining, based on the at least one instruction executed by the process in the second state, profile information used for obtaining instructions in the first type from the instructions in the second type included in the package file.

For example, the executing may comprise executing at least one of the instructions stored in a volatile memory of the electronic device by using a virtual machine process executed by the processor.

For example, the method may further comprise display, in the display after executing the process in the second state, an icon representing the application corresponding to the package file.

For example, the method may comprise switching, in response to an input indicating to select the icon, a state of the process executed in the second state, to the first state. The method may further comprise obtaining, based on the process switched to the first state, a screen, which corresponding to the input, to be displayed through a display of the electronic device.

For example, the executing may comprise executing, based on the second state different from the first state for directly controlling the display of the electronic device, the process.

For example, the obtaining the profile information may comprise performing compile for at least one of groups of instructions in the second type included in the package file based on the obtained profile information.

As described above, according to an embodiment, a method of an electronic device may comprise storing (or loading, e.g., operation 710 of FIG. 7) instructions included in a package file that is received through a communication circuit of the electronic device and is stored in a non-volatile memory of the electronic device, in a volatile memory of the electronic device. The method may comprise executing (e.g., operation 720 of FIG. 7), based on the instructions stored in the volatile memory, a process in a second state different from a first state for displaying a screen in a display of the electronic device. The method may comprise displaying (e.g., operation 750 of FIG. 7), in response to an input indicating to execute a process corresponding to the package file, a screen corresponding to the input in the display based on switching a state of the process from the second state to the first state.

For example, the method may further comprise displaying, in the display after executing the process in the second state, an icon representing the application corresponding to the package file.

For example, the displaying the display may comprise displaying, in response to the input indicating to select the icon, the screen corresponding to the input and the process switched to the first state, in the display.

For example, the storing may comprise storing, based on a second system process different from a first system process for executing the application based on the input, the instructions in the non-volatile memory in the volatile memory.

For example, the executing may comprise executing, based on a virtual machine process for controlling the processor based on instructions in a second type different from instructions in a first type executable by the processor, a process in the second state from the instructions stored in the volatile memory.

For example, the executing a process in the second state may comprise obtaining, based on executing the process in the second state, profile information used to compile for the instructions in the second type included in the package file.

For example, the method may comprise obtaining, by compiling at least one of the instructions in the second type included in the package file based on the profile information, an optimized file used for executing the application. The method may comprise storing the optimized file in the non-volatile memory.

For example, the executing may comprise identifying, by executing the process in the second state based on a virtual displaying area different from a displaying area of the display, at least one group executed by the second process in the second state among groups of the instructions included in the package file.

For example, the executing may comprise obtaining profile information for compiling the at least one identified group among the groups.

As described above, according to an embodiment, an electronic device may comprise a communication circuit and a processor. The processor may be configured to receive, through a communication circuitry of the electronic device, a package file of an application, including instructions in a second type different from instructions in a first type directly readable by a processor of the electronic device. The method may comprise identifying profile information corresponding to the package file in a first state in which accessing to a resource of the electronic device different from the processor is permitted. The processor may be configured to obtain instructions in the first type from the instructions in the second type included in the package file based on the profile information. The processor may be configured to execute at least one of the instructions in the second type included in the package file, based on a process of which a state is corresponding to the second state different from the first state. The processor may be configured to obtain, based on the at least one instruction executed by the process in the second state, profile information used for obtaining instructions in the first type from the instructions in the second type included in the package file.

For example, the processor may be configured to perform compile for at least one of groups of instructions in the second type included in the package file based on the obtained profile information.

The apparatus described above may be implemented as a combination of hardware components, software components, and/or hardware components and software components. For example, the devices and components described in the embodiments may be implemented using one or more general purpose computers or special purpose computers such as processors, controllers, arithmetical logic unit(ALU), digital signal processor, microcomputers, field programmable gate array (FPGA), PLU(programmable logic unit), microprocessor, any other device capable of executing and responding to instructions. The processing device may perform an operating system OS and one or more software applications performed on the operating system. In addition, the processing device may access, store, manipulate, process, and generate data in response to execution of the software. For convenience of understanding, although one processing device may be described as being used, a person skilled in the art may see that the processing device may include a plurality of processing elements and/or a plurality of types of processing elements. For example, the processing device may include a plurality of processors or one processor and one controller. In addition, other processing configurations, such as a parallel processor, are also possible.

The software may include a computer program, code, instruction, or a combination of one or more of them and configure the processing device to operate as desired or command the processing device independently or in combination. Software and/or data may be embodied in any type of machine, component, physical device, computer storage medium, or device to be interpreted by a processing device or to provide instructions or data to the processing device. The software may be distributed on a networked computer system and stored or executed in a distributed manner. Software and data may be stored in one or more computer-readable recording media.

The method according to the embodiment may be implemented in the form of program instructions that may be performed through various computer means and recorded in a computer-readable medium. In this case, the medium may continuously store a computer-executable program or temporarily store the program for execution or download. In addition, the medium may be a variety of recording means or storage means in which a single or several hardware are combined and is not limited to media directly connected to any computer system and may be distributed on the network. Examples of media may include magnetic media such as hard disks, floppy disks and magnetic tapes, optical recording media such as CD-ROMs and DVDs, magnetooptical media such as floppy disks, ROMs, RAMs, flash memories, and the like to store program instructions. Examples of other media include app stores that distribute applications, sites that supply or distribute various software, and recording media or storage media managed by servers.

Although embodiments have been described according to limited embodiments and drawings as above, various modifications and modifications are possible from the above description to those of ordinary skill in the art. For example, even if the described techniques are performed in a different order from the described method, and/or components such as the described system, structure, device, circuit, etc. are combined or combined in a different form from the described method or are substituted or substituted by other components or equivalents, appropriate results may be achieved.

Therefore, other implementations, other embodiments, and equivalents to the claims fall within the scope of the claims to be described later.

## Claims

1. An electronic device (101), comprising;
a non-volatile memory (134);
a volatile memory (132);
a display (120);
a communication circuitry (215); and
a processor (120), wherein the processor is configured to:
load , in the volatile memory, instructions included in a package file (220) which is stored in the non-volatile memory, and is received through the communication circuitry;
execute, based on the instructions stored in the volatile memory, a process in a second state which is different from a first state for displaying a screen of the application in the display; and
display, in the display in response to an input for executing a process corresponding to the package file, the screen corresponding to the application by switching a state of the process from the second state to the first state.

2. The electronic device of claim 1, wherein the processor is configured to:
display, in the display after executing the process in the second state, an icon representing the application corresponding to the package file.

3. The electronic device of claim 2, wherein the processor is configured to:
display, in response to the input indicating to select the icon, the screen corresponding to the input and the process switched to the first state, in the display (120).

4. The electronic device of any one of claim 1 to claim 3, wherein the processor is configured to:
store, based on a second system process different from a first system process for executing the application based on the input, the instructions in the non-volatile memory in the volatile memory.

5. The electronic device of any one of claim 1 to claim 4, wherein the processor is configured to:
execute, based on a virtual machine process for controlling the processor based on instructions in a second type different from instructions in a first type executable by the processor, a process in the second state from the instructions stored in the volatile memory.

6. The electronic device of claim 5, wherein the processor is configured to:
obtain, based on executing the process in the second state, profile information (225) used to compile for the instructions in the second type included in the package file.

7. The electronic device of any one of claim 5 to claim 6, wherein the processor is configured to:
obtain, by compiling at least one of the instructions in the second type included in the package file based on the profile information, an optimized file (260) used for executing the application; and
store the optimized file in the non-volatile memory.

8. The electronic device of any one of claim 1 to claim 7, wherein the processor is configured to:
identify, by executing the process in the second state based on a virtual displaying area different from a displaying area of the display, at least one group executed by the second process in the second state among groups of the instructions included in the package file.

9. The electronic device of claim 8, wherein the processor is configured to:
obtain profile information for compiling the at least one identified group among the groups.

10. The electronic device of any one of claim 1 to claim 9, wherein the processor is configured to:
update, based on the process switched to the first state based on the input, the profile information.

11. The electronic device of any one of claim 1 to claim 10, wherein the first state is a state in which controlling at least one of the display or the communication circuit is allowed based on executing the process.

12. The electronic device of any one of claim 1 to claim 11, wherein the processor is configured to:
obtain, based on executing the process in the second state, profile information indicating frequencies that distinct groups of the instructions included in the package file are called by the process in the second state.

13. The electronic device of any one of claim 1 to claim 12, wherein the processor is configured to:
receive, based on executing the second application different from the application that is a first application, the package file through the communication circuit.

14. A method of an electronic device, comprising:
receiving, through a communication circuitry of the electronic device, a package file of an application, including instructions in a second type different from instructions in a first type directly readable by a processor of the electronic device;
identifying profile information corresponding to the package file in a first state in which accessing to a resource of the electronic device different from the processor is permitted;
obtaining instructions in the first type from the instructions in the second type included in the package file based on the profile information;
executing at least one of the instructions in the second type included in the package file, based on a process of which a state is corresponding toa second state different from the first state; and
obtaining, based on the at least one instruction executed by the process in the second state, profile information used for obtaining instructions in the first type from the instructions in the second type included in the package file.

15. A non-transitory computer readable storage medium storing instructions, wherein the instructions are configured to, when executed by at least one processor of an electronic device, cause the electronic device to perform the method of claim 14
